# EUROPEAN PATENT APPLICATION

(11) **EP 2 840 635 A1**
(43) Date of publication of application: **25.02.2015**
(21) Application number: 13778369.2
(22) Date of filing: 27.02.2013
(51) Int. Cl.: H01M 4/86, H01M 8/02, H01M 8/04, H01M 8/10

(54) **MEMBRANE-ELECTRODE ASSEMBLY, FUEL CELL STACK, FUEL CELL SYSTEM, AND METHOD FOR OPERATION THEREOF**

(30) Priority: 20.04.2012 JP 2012096895
(71) Applicant: Panasonic Intellectual Property Management Co., Ltd., Osaka-shi, Osaka 540-6207 (JP)
(72) Inventor: ISHIKAWA, Hiroshi, Osaka 540-6207 (JP); TSUJI, Yoichiro, Osaka 540-6207 (JP)
(74) Representative: Grünecker, Kinkeldey, Stockmair & Schwanhäusser
(86) International application number: PCT/JP2013/001162
(87) International publication number: WO 2013/157182

(57) **Abstract**

A membrane-electrode assembly (26) includes: a polymer electrolyte membrane (32); catalyst layers (38, 42) disposed on the polymer electrolyte membrane,; and gas diffusion layers (40, 44) respectively disposed on the catalyst layers. Each of the gas diffusion layers is constituted by a porous member containing electrically-conductive particles and polymer resin as major components, and a ratio (y/x) of a tensile strength y (N/cm) of the gas diffusion layer to a dry-wet size change rate x (%) of the polymer electrolyte membrane is 0.10 or higher.

## Description

### Technical Field

The present invention relates to a membrane-electrode assembly, a fuel cell stack, a fuel cell system, and an operation method thereof.

### Background Art

In conventional fuel cells, an electrolyte membrane in a membrane-electrode assembly achieves excellent ionic conductivity when in a wet state, so that steam is supplied to the membrane-electrode assembly. When an electric power generating reaction is caused in electrodes provided to sandwich the electrolyte membrane, water is generated by the electric power generating reaction. With this, the electrolyte membrane swells to expand. At the time of start-up of the fuel cell that is not generating electric power and at the time of stop of the fuel cell, an oxidizing gas that is low in humidity is supplied to the membrane-electrode assembly, so that the electrolyte membrane dries to contract. By the electrolyte membrane that expands or contract as above, a force is applied to a gas diffusion layer contacting the electrolyte membrane, and there is concern that plastic deformation of the gas diffusion layer occurs, or the gas diffusion layer breaks. Here, known is a technology in which the break and the like of the gas diffusion layer is prevented by using as a base member of the gas diffusion layer carbon paper that excels in toughness (see PTL 1, for example).

On the other hand, to reduce the cost, proposed is a gas diffusion layer not including the carbon paper that is expensive. This gas diffusion layer is constituted by a porous material layer and one of an electrically conductive carbon layer and electrically conductive carbon particles (see PTL 2, for example).

### Citation List

### Patent Literature

PTL 1: Japanese Laid-Open Patent Application Publication No. 2009-9750
PTL 2: Japanese Laid-Open Patent Application Publication No. 2010-129393

### Summary of Invention

### Technical Problem

However, PTL 2 does not describe the plastic deformation and break of the gas diffusion layer due to the expansion or contraction of the electrolyte membrane. Therefore, there is still room for improvement from the viewpoint of the plastic deformation and break of the gas diffusion layer due to the expansion or contraction of the electrolyte membrane.

The present invention was made to solve the above problems, and an object of the present invention is to provide a membrane-electrode assembly, a fuel cell stack, a fuel cell system, and an operation method thereof, each of which is lower in cost than conventional arts and is improved in mechanical durability.

### Solution to Problem

A membrane-electrode assembly according to an aspect of the present invention includes: a polymer electrolyte membrane; catalyst layers disposed on the polymer electrolyte membrane; and gas diffusion layers respectively disposed on the catalyst layers, wherein: each of the gas diffusion layers is constituted by a porous member containing electrically-conductive particles and polymer resin as major components; and a ratio (y/x) of a tensile strength y (N/cm) of the gas diffusion layer to a dry-wet size change rate x (%) of the polymer electrolyte membrane is 0.10 or higher.

### Advantageous Effects of Invention

The present invention has an effect of being able to provide a membrane-electrode assembly, fuel cell stack, fuel cell system, and operation method thereof, each of which is lower in cost than conventional arts and is improved in mechanical durability.

The above object, other objects, features and advantages of the present invention will be made clear by the following detailed explanation of preferred embodiments with reference to the attached drawings.

### Brief Description of Drawings

[Fig. 1] Fig. 1 is a functional block diagram showing the configuration of a fuel cell stack according to Embodiment 1 of the present invention and the configuration of a fuel cell system including the fuel cell stack.
[Fig. 2] Fig. 2 is a schematic diagram showing a membrane-electrode assembly included in the fuel cell stack of Fig. 1.
[Fig. 3] Fig. 3 is a graph showing a relationship between a dry-wet size change rate of an electrolyte membrane and a tensile strength of a gas diffusion layer in the membrane-electrode assembly of Fig. 2.
[Fig. 4] Fig. 4 is a table showing results of durability tests of the membrane-electrode assembly of Fig. 2.
[Fig. 5] Fig. 5 is a graph showing a plot of data of the test results of Fig. 4.

### Description of Embodiments

### Finding that is Basis of Present Invention

The present inventors have diligently studied the plastic deformation and break of the gas diffusion layer due to the expansion or contraction of the electrolyte membrane in the fuel cell including the gas diffusion layer not including the carbon paper as in the conventional art described in PTL 2. As a result, even in the case of the gas diffusion layer that was low in strength, high durability was successfully obtained by suppressing the size change of the electrolyte membrane to a predetermined value. Specifically, the present inventors have focused on two parameters that are the strength of the gas diffusion layer and the dry-wet size change rate of the electrolyte membrane. The present inventors have found out by experiments and the like that the break of the gas diffusion layer due to the expansion or contraction of the electrolyte membrane is suppressed in a case where a ratio between these two parameters falls within a predetermined range. The present invention was made based on this finding.

### Embodiment

A membrane-electrode assembly according to a first aspect of the present invention includes: a polymer electrolyte membrane; catalyst layers disposed on the polymer electrolyte membrane; and gas diffusion layers respectively disposed on the catalyst layers, wherein: each of the gas diffusion layers is constituted by a porous member containing electrically-conductive particles and polymer resin as major components; and a ratio (y/x) of a tensile strength y (N/cm) of the gas diffusion layer to a dry-wet size change rate x (%) of the polymer electrolyte membrane is 0.10 or higher.

According to this configuration, since the stress applied to each of the gas diffusion layers by the expansion or contraction of the polymer electrolyte membrane by the dry-wet cycle is lower than the tensile strength of each of the gas diffusion layers when the ratio y/x is 0.10 or higher, the plastic deformation, break, and the like of the gas diffusion layers can be prevented. As a result, even each of the gas diffusion layers not including the carbon fibers as the base member can obtain high mechanical durability.

The membrane-electrode assembly according to a second aspect of the present invention may be configured such that in the first aspect, the tensile strength y of the gas diffusion layer is 4.2 N/cm or lower.

According to this configuration, the gas diffusion layer can be prevented from increasing in cost and size and decreasing in gas permeability.

The membrane-electrode assembly according to a third aspect of the present invention may be configured such that in the first or second aspect, each of the dry-wet size change rate in a length direction that is a flow direction of the polymer electrolyte membrane when producing the polymer electrolyte membrane and the dry-wet size change rate in a width direction perpendicular to the length direction is 20% or lower.

According to this configuration, the gas diffusion layer can be prevented from increasing in cost and size and decreasing in gas permeability.

The membrane-electrode assembly according to a fourth aspect of the present invention may be configured such that in any one of the first to third aspects, an adhesive strength between the catalyst layer and the gas diffusion layer is 0.1 MPa or higher.

According to this configuration, the gas diffusion layer is prevented from being separated from the catalyst layer.

A fuel cell stack according to a fifth aspect of the present invention includes a plurality of cells, each including the membrane-electrode assembly according to any one of the first to fourth aspects and a pair of plate-shaped separators sandwiching the membrane-electrode assembly, wherein a width of a groove that is a reactant gas channel formed on a main surface of each of the separators is 1.1 mm or shorter, the main surface being opposed to the gas diffusion layer of the membrane-electrode assembly.

According to this configuration, high mechanical durability can be obtained at low cost.

A fuel cell system according to a sixth aspect of the present invention includes: a fuel cell stack including a plurality of cells, each including the membrane-electrode assembly according to any one of the first to fourth aspects and a pair of plate-shaped separators sandwiching the membrane-electrode assembly, reactant gas channels being respectively formed on main surfaces of the separators, the main surfaces being respectively opposed to the pair of gas diffusion layers of the membrane-electrode assembly; and a reactant gas supply device configured to respectively supply a fuel gas and an oxidizing gas as reactant gases to the reactant gas channels of the pair of separators.

According to this configuration, high mechanical durability can be obtained at low cost.

A method of operating a fuel cell system according to a seventh aspect of the present invention is a method of operating a fuel cell system, the fuel cell system including: a fuel cell stack including a plurality of cells, each including the membrane-electrode assembly according to any one of the first to fourth aspects and a pair of plate-shaped separators sandwiching the membrane-electrode assembly, reactant gas channels being respectively formed on main surfaces of the separators, the main surfaces being respectively opposed to the pair of gas diffusion layers of the membrane-electrode assembly; and a reactant gas supply device, wherein the fuel cell stack generates electric power in such a manner that the reactant gas supply device respectively supplies a fuel gas and an oxidizing gas as reactant gases to the reactant gas channels of the pair of separators of the fuel cell stack.

According to this configuration, high mechanical durability can be obtained at low cost.

The method of operating the fuel cell system according to an eighth aspect of the present invention may be configured such that in the seventh aspect, the fuel cell stack generates the electric power under conditions that a temperature inside the fuel cell stack is not lower than 5°C and not higher than 90°C.

According to this configuration, the break of the gas diffusion layer may be prevented.

The method of operating the fuel cell system according to a ninth aspect of the present invention may be configured such that in the seventh or eighth aspect, the fuel cell stack generates the electric power under conditions that a relative humidity inside the membrane-electrode assembly is not lower than 0% and not higher than 100%.

According to this configuration, the break of the gas diffusion layer may be prevented.

Hereinafter, embodiments of the present invention will be specifically explained in reference to the drawings.

In the following explanations and drawings, the same reference signs are used for the same or corresponding components, and a repetition of the same explanation is avoided.

**Embodiment 1**

### Configuration of Fuel Cell System

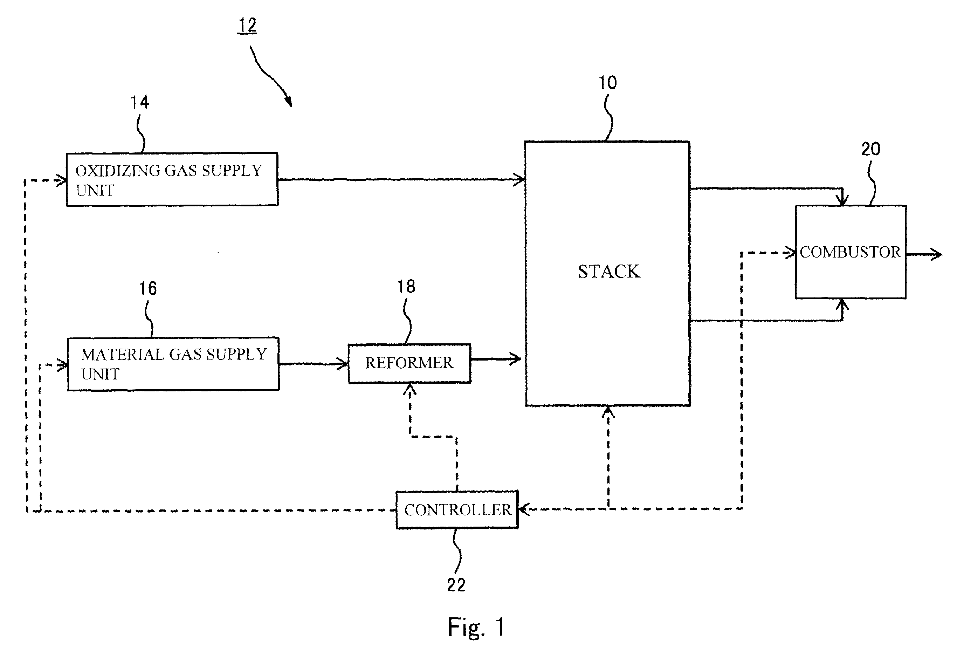

Fig. 1 is a functional block diagram showing the configuration of a fuel cell stack 10 according to Embodiment 1 and the configuration of a fuel cell system 12 including the fuel cell stack 10.

The fuel cell system 12 includes a fuel cell stack (hereinafter referred to as a "stack") 10, an oxidizing gas supply unit 14, a material gas supply unit 16, a reformer 18, a combustor 20, and a controller 22.

The oxidizing gas supply unit 14 is a reactant gas supply device configured to supply an oxidizing gas as a reactant gas to a reactant gas channel of a below-described cathode separator. The oxidizing gas supply unit 14 is connected to the stack 10 through an oxidizing gas supply passage and supplies the oxidizing gas to the stack 10. Examples of the oxidizing gas include air and oxygen. Examples of the oxidizing gas supply unit 14 include air blowers, such as a fan or a blower, configured to send air, and oxygen bombs. The oxidizing gas supply unit 14 has a flow rate adjustment function of supplying the oxidizing gas while adjusting the flow rate in accordance with a control signal from the controller 22.

The material gas supply unit 16 and the reformer 18 constitute a fuel gas supply unit, and the fuel gas supply unit is one example of a reactant gas supply device configured to supply a fuel gas as a reactant gas to a reactant gas channel of a below-described anode separator. The material gas supply unit 16 is connected to the reformer 18 through a material gas supply passage and supplies a material gas to the reformer 18. The material gas supply unit 16 is constituted by a material gas bomb, a booster connected to a material gas supply infrastructure, an on-off valve, a flow rate control valve, and the like. The material gas supply unit 16 has a function of supplying the material gas and a function of adjusting the flow rate of the material gas. Examples of the material gas include hydrocarbon gases (such as a natural gas), other hydrocarbon gases (such as a propane gas), hydrocarbon fuels (such as kerosene) that are liquid at normal temperature, and organic fuels (such as methanol) other than the hydrocarbon fuels.

The reformer 18 is connected to the stack 10 through a fuel gas supply passage. The material gas is supplied from the material gas supply unit 16 to the reformer 18. Further, depending on a reforming method (steam reforming, partial oxidation, or autothermal reforming), an oxygen-containing gas, such as steam and/or air, is supplied to the reformer 18 through a supply passage (not shown). For example, in the case of the steam reforming, the reformer 18 is heated by the combustor 20 and reforms the material gas by utilizing this heat to generate a hydrogen-containing fuel gas. Then, the reformer 18 supplies the fuel gas to the stack 10. The fuel gas supply unit may be constituted by a hydrogen bomb, a hydrogen gas infrastructure, or the like.

As described below, the stack 10 causes an oxidation-reduction reaction (hereinafter referred to as an "electric power generating reaction") between the fuel gas and the oxidizing gas to generate electric power. The stack 10 is constituted by, for example, a polymer electrolyte fuel cell. A temperature detector (not shown) is provided at the stack 10. The temperature inside the stack 10 detected by the temperature detector is output to the controller 22. The temperature detector may be omitted.

For example, the combustor 20 is connected to the stack 10 through an off gas discharge passage, and an off gas is supplied from the stack 10 to the combustor 20. The off gas contains, for example, the fuel gas unconsumed in the electric power generating reaction. The combustor 20 is configured to heat the reformer 18 by its flue gas. The combustor 20 combusts the off gas to heat the reformer 18. The flue gas generated by the combustion in the combustor 20 is discharged through a discharge passage (not shown) to the outside of the fuel cell system.

The controller 22 may include a calculation processing function. The controller 22 is constituted by a microcontroller, a CPU, a MPU, a logic circuit, a PLC (Programmable Logic Controller), or the like. The controller 22 may be constituted by a single controller that performs centralized control or by a plurality of controllers that cooperate to perform distributed control. The controller 22 controls the material gas supply unit 16 and the oxidizing gas supply unit 14 to control the electric power generation performed by the stack 10. Based on the temperature of the stack 10 detected by the temperature detector, the controller 22 controls the temperature inside the stack 10 at the time of the electric power generation. Specifically, for example, a cooling system (not shown) is provided at the stack 10, and the controller 22 controls the temperature inside the stack 10 by adjusting a cooling amount of the cooling system in accordance with the amount of electric power generated. The temperature inside the stack 10 at the time of the electric power generation is controlled to, for example, not lower than 5°C and not higher than 90°C. The temperature inside the stack 10 may be controlled to, for example, not lower than 23°C and not higher than 90°C. Further, the controller 22 controls relative humidity inside a below-described membrane-electrode assembly 26 in the stack 10 at the time of the electric power generation. Specifically, for example, the controller 22 controls via a waterer (not shown) the amount of water for the reforming supplied to the reformer 18, to control the dew point of the fuel gas supplied to the stack 10. At this time, the controller 22 controls the dew point of the fuel gas in accordance with the temperature inside the stack 10 to control the relative humidity inside the membrane-electrode assembly 26. Here, a humidifier (not shown) may be provided at at least one of the oxidizing gas supply passage and the fuel gas supply passage, and the controller 22 may control a humidification amount of the humidifier to control at least one of the dew point of the oxidizing gas supplied to the stack 10 and the dew point of the fuel gas supplied to the stack 10, thereby controlling the relative humidity inside the membrane-electrode assembly 26. The relative humidity inside the membrane-electrode assembly 26 is controlled to, for example, not lower than 0% and not higher than 100%.

### Configuration of Stack

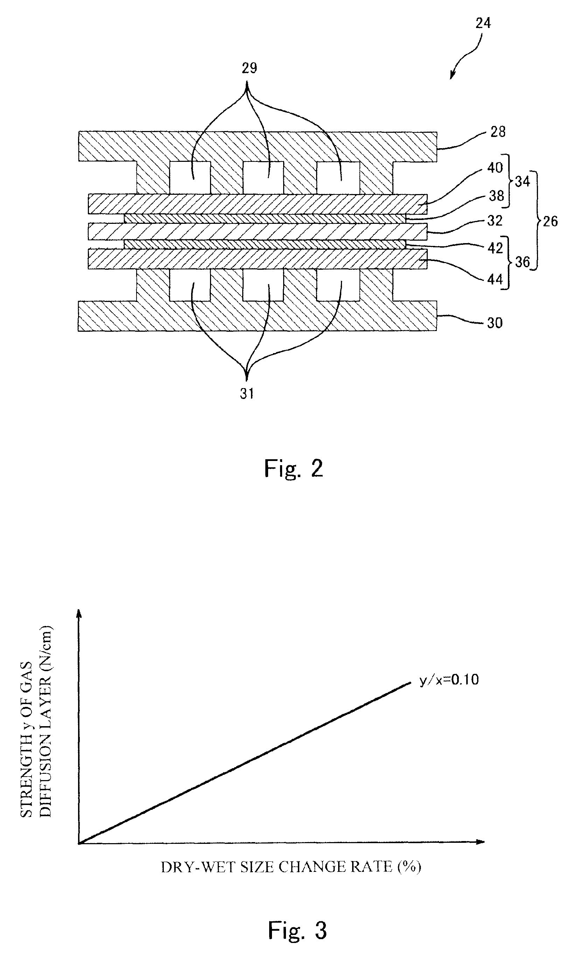

Fig. 2 is a schematic diagram showing the membrane-electrode assembly 26 included in the fuel cell stack 10.

The stack 10 is constituted by stacking a plurality of cells 24. Each of the cells 24 includes the membrane-electrode assembly 26 and a pair of plate-shaped separators 28 and 30 sandwiching the membrane-electrode assembly 26. The membrane-electrode assembly 26 includes an anode 34, a cathode 36, and a polymer electrolyte membrane (hereinafter referred to as an "electrolyte membrane") 32 sandwiched between the anode 34 and the cathode 36.

The electrolyte membrane 32 is, for example, a polymer membrane having hydrogen ion conductivity (proton conductivity) when in a wet state. In the present embodiment, the electrolyte membrane 32 has a substantially rectangular shape. A material of the electrolyte membrane 32 is not especially limited as long as the material selectively allows hydrogen ions to move therethrough. Examples of the electrolyte membrane 32 include fluorinated electrolyte membranes made of perfluoro carbon sulfonic acid (such as Nafion (trademark) produced by DuPont in the U.S., Aciplex (trademark) produced by Asahi Kasei Chemicals Corporation, and Flemion (trademark) produced by Asahi Glass Co., Ltd.) and various hydrocarbon electrolyte membranes.

The electrolyte membrane 32 includes a core member. The core member is constituted by a porous member, such as a resin or metal net. Examples of the resin include polyethylene and polyphenyl sulfide. Examples of the metal include palladium. vanadium, copper, aluminium, and stainless steel.

The electrolyte membrane 32 expands as the amount of water contained therein increases and contracts as the amount of water contained therein decreases. In the present specification, a dry-wet size change rate x (%) denotes a change rate ((L2/L1-1)*100) of a length (L2) of the electrolyte membrane in the wet state based on a length (L1) of the electrolyte membrane in the dry state. To be specific, vertical direction and horizontal direction dry-wet size change rates of the rectangular electrolyte membrane are measured, and a higher one of those dry-wet size change rates is regarded as the dry-wet size change rate of this electrolyte membrane. The dry state denotes a state of the electrolyte membrane that has been placed at a temperature of 23°C and a relative humidity of 50% for an hour, and the wet state denotes a state of the electrolyte membrane that has been placed in hot water of 90°C for an hour. As shown in Fig. 3, the dry-wet size change rate x (%) is set such that a ratio (y/x) of a tensile strength y (N/cm) of a below-described gas diffusion layer 40, 44 to the dry-wet size change rate x (%) becomes 0.10 or higher. The dry-wet size change rate x (%) of the electrolyte membrane 32 is adjusted by the core member included in the electrolyte membrane 32. For example, the dry-wet size change rate of the electrolyte membrane decreases by, for example, increasing the thickness of the core member or decreasing the porosity of the core member. In addition, the dry-wet size change rate of the electrolyte membrane can be adjusted by changing the material of the core member. The porosity of the core member denotes a ratio of the area of holes to the entire area of the core member.

In the present specification, the tensile strength (N/cm) is measured as below. A test piece having a dumbbell shape corresponding to JIS K-6251-2 is prepared. An upper end and lower end of a GDL is fixed by a load cell of a tensile tester. While fixing the position of the lower end, the upper end sandwiched by a jig is moved upward at a speed of 10 mm/min. As a displacement (mm) of the GDL increases, the load applied to the GDL increases, and the GDL finally breaks. A standardized value obtained by dividing a maximum load (N) that is a load immediately before the break of the GDL by a width of 1 cm is defined as the tensile strength (N/cm). The tensile strength is measured at a temperature of 23 °C and a humidity of 50%.

The electrolyte membrane 32 has a length direction MD (Machine Direction) and a width direction TD. The length direction MD is a flow direction (conveyance direction) of the electrolyte membrane 32 at the time of production, and the width direction TD is perpendicular to the length direction MD. In the electrolyte membrane 32, a dry-wet size change rate xMT in the flow direction MD and a dry-wet size change rate xTD in the width direction TD are different from each other. However, the dry-wet size change rates xMT and xTD of the electrolyte membrane 32 may be the same as each other. Each of the dry-wet size change rates xMT and xTD is set to, for example, 20% or lower. Especially, each of the dry-wet size change rates xMT and xTD falls within a range of preferably 1 to 10%, and more preferably 5 to 10%.

The anode 34 is constituted by a catalyst layer (anode catalyst layer) 38 and a gas diffusion layer (anode gas diffusion layer) 40. The cathode 36 is constituted by a catalyst layer (cathode catalyst layer) 42 and a gas diffusion layer (cathode gas diffusion layer) 44.

Each of the catalyst layers 38 and 42 preferably includes a layer containing a catalyst with respect to a hydrogen or oxygen oxidation-reduction reaction. Each of the catalyst layers 38 and 42 is not especially limited as long as it has electrical conductivity and a catalytic ability with respect to the hydrogen or oxygen oxidation-reduction reaction. In the present embodiment, each of the catalyst layers 38 and 42 has a substantially rectangular shape. Each of the catalyst layers 38 and 42 is constituted by, for example, a porous member containing as major components carbon powder supporting a platinum group metal catalyst and a polymeric material having proton electrical conductivity. A proton electrically-conductive polymer material used in the catalyst layers 38 and 42 may be the same as that of the electrolyte membrane 32 and may be different from that of the electrolyte membrane 32.

Each of the gas diffusion layers 40 and 44 is preferably a porous member having electrical conductivity. Each of the gas diffusion layers 40 and 44 has a plate shape and a substantially rectangular shape. The thickness of each of the gas diffusion layers 40 and 44 is set to, for example, 1 mm. The gas diffusion layers 40 and 44 are respectively adhered to the catalyst layers 38 and 42, and this adhesive strength is set to 0.1 MPa or higher. As the base member of each of the gas diffusion layers 40 and 44, for example, a porous member containing electrically-conductive particles and polymer resin as major components may be used without using carbon fibers. The tensile strength y of each of the gas diffusion layers 40 and 44 is set to 4.2 N/cm or lower.

Here, the "porous member containing electrically-conductive particles and polymer resin as major components" denotes a porous member which does not include the carbon fibers as the base member and has a structure (so-called self-supporting structure) supported only by the electrically-conductive particles and the polymer resin. In other words, the "porous member containing electrically-conductive particles and polymer resin as major components" denotes that the porous member does not contain the base member made of the carbon fibers (a member, such as paper, woven fabric, or nonwoven fabric, configured such that carbon fibers intertwine to form a continuous flat surface). In the case of producing the porous member by using the electrically-conductive particles and the polymer resin, for example, a surfactant and a dispersion solvent are used as described below. In this case, the surfactant and the dispersion solvent are removed by firing in the production process. However, they may not be removed adequately and remain in the porous member. Therefore, the "porous member containing electrically-conductive particles and polymer resin as major components" denotes that as long as the porous member has the structure supported only by the electrically-conductive particles and the polymer resin, the remaining surfactant and dispersion solvent may be contained in the porous member. In addition, the "porous member containing electrically-conductive particles and polymer resin as major components" denotes that as long as the object of the present invention can be achieved, the porous member may contain a material (such as short carbon fibers) in addition to the electrically-conductive particles, the polymer resin, the surfactant, and the dispersion solvent.

Channels may be formed on the gas diffusion layer for the fuel cell. To be specific, projections and depressions of, for example, the channels may be formed on one of two main surfaces of the gas diffusion layer for the fuel cell, the one main surface being opposite to the other main surface located at the catalyst layer side.

The "porous member" denotes a member having an ability to allow gases (such as the fuel gas and the oxidizing gas) to permeate therethrough to a level that the gas diffusion layer can be used in the fuel cell.

The gas diffusion layer for the fuel cell may comprise a base (matrix) formed by uniformly dispersing the electrically-conductive particles and the polymer resin in a surface direction. The "surface direction" denotes a direction in which the gas diffusion layer extends. The expression "formed by uniformly dispersing the electrically-conductive particles and the polymer resin in a surface direction" denotes a state where, for example, the electrically-conductive particles and the polymer resin are distributed substantially uniformly in the surface direction. The electrically-conductive particles and the polymer resin may be or may not be distributed uniformly in a thickness direction. To be specific, the gas diffusion layer for the fuel cell may be such that: a plurality of layers stacked in the thickness direction are formed; in each of the layers, the electrically-conductive particles and the polymer resin are distributed substantially uniformly in the surface direction; and the density, composition, and the like are different among these layers. This means, for example, a case where the electrically-conductive particles and the polymer resin are kneaded and then shaped. However, a producing method is not especially limited. These points above are also true in the other embodiments.

The "porous member containing electrically-conductive particles and polymer resin as major components" may be a member having an air permeability (air resistance) of 100 seconds or more. The air resistance denotes a time required for air of a specified volume (100 mL) to permeate per unit area and unit pressure difference. In the present specification, the air resistance is calculated by a Gurley method based on JIS-P8177:2009. JIS-P8177:2009 is the same as ISO5636-5:2003 except that the range of an applicable air resistance is not limited. In the above standard, a B type device is used, and measurements are started when the air has passed the first 50 ml gauge line.

Examples of a material of the electrically-conductive particles include carbon materials, such as graphite, carbon black, and activated carbon. Examples of the carbon black include acetylene black (AB), furnace black, ketjen black, and vulcan, and these materials may be used alone or in combination. The form of the carbon materials may be a powder form, a fiber form, a particle form, or the like.

Examples of the polymer resin include PTFE (polytetrafluoroethylene), FEP (tetrafluoroethylene hexafluoropropylene copolymer), PVDF (polyvinylidene fluoride), ETFE (tetrafluoroethylene ethylene copolymer), PCTFE (polychlorotrifluoroethylene), and PFA (tetrafluoroethylene perfluoro alkyl vinyl ether copolymer). From the viewpoint of a heat resistance, a water repellency, and a chemical resistance, PTFE is preferable. The form of the material of PTFE is a dispersion form or a powder form. From the viewpoint of the workability, the dispersion is preferable. The polymer resin serves as a binder that binds the electrically-conductive particles to one another. Since the polymer resin has the water repellency, it has a function (water retention ability) of keeping water in a system in the fuel cell.

In addition to the electrically-conductive particles and the polymer resin, each of the gas diffusion layers 40 and 44 may contain a small amount of surfactant, dispersion solvent, and the like used when producing the cathode gas diffusion layer 44. Examples of the dispersion solvent include water, alcohols (such as methanols and ethanols), and glycols (such as ethylene glycols). Examples of the surfactant include nonions (such as polyoxyethylene alkyl ether) and amphoteric ions (such as alkyl amine oxides). The surfactant can be suitably selected depending on the material (carbon material) of the electrically-conductive particles and the type of the dispersion solvent. The surfactant may not be used. The amount of dispersion solvent and the amount of surfactant used at the time of the production may be suitably set in accordance with, for example, the type of the electrically-conductive particles, the type of the polymer resin, and a compounding ratio between the electrically-conductive particles and the polymer resin. Generally, as the amount of dispersion solvent and the amount of surfactant increase, the polymer resin (fluorocarbon resin) and the electrically-conductive particles (carbon) easily, uniformly disperse. However, flowability increases, so that the formation of a sheet tends to become difficult. The cathode gas diffusion layer 44 may contain a material (such as short carbon fibers) in addition to the electrically-conductive particles, the polymer resin, the surfactant, and the dispersion solvent.

The anode gas diffusion layer 40 and the cathode gas diffusion layer 44 may be formed by the same materials or different materials.

Each of the gas diffusion layers 40 and 44 not including the carbon fiber as the base member is produced in such a manner that, for example, a mixture containing the polymer resin and the electrically-conductive particles is kneaded, extruded, rolled out, and fired. Specifically, after the carbon that is the electrically-conductive particles, the dispersion solvent, and the surfactant are put in a kneading mixer, these are kneaded, crushed, and agglomerated. Thus, the carbon is dispersed in the dispersion solvent. Next, the fluorocarbon resin that is the polymer resin is further put in the kneading mixer, and those are stirred and kneaded. Thus, the carbon and the fluorocarbon resin are dispersed. The obtained mixture is rolled out to become a sheet, and the sheet is fired to remove the dispersion solvent and the surfactant. Thus, the sheet for forming the gas diffusion layers 40 and 44 is produced.

The separators 28 and 30 are members configured to mechanically fix the membrane-electrode assembly 26 and electrically connecting the adjacent membrane-electrode assemblies 26 with each other in series. Each of the separators 28 and 30 is, for example, formed by a material containing carbon or a material containing metal. In a case where each of the separators 28 and 30 is formed by a material containing carbon, each of the separators 28 and 30 is formed such that a material powder obtained by mixing carbon powder and resin binder is supplied to a mold, and pressure and heat are applied to the material powder supplied to the mold. In a case where each of the separators 28 and 30 is formed by a material containing metal, each of the separators 28 and 30 may be constituted by a metal plate. A titanium or stainless steel plate having a surface subjected to gold plating may be used as each of the separators 28 and 30. Each of the separators 28 and 30 may be formed by a porous plate having electrical conductivity.

Each of the separators 28 and 30 is formed by, for example, a flat plate having a substantially rectangular shape. Each of the separators 28 and 30 has a main surface (electrode surface) which is opposed to the gas diffusion layer 40 or 44 and on which a plurality of grooves that form a reactant gas channel 29 or 31 are formed and the other main surface (cooling surface) on which a plurality of grooves that form the cooling medium channel (not shown) are formed. The grooves are formed on the separators 28 and 30 by a suitable method (such as molding using a pressing machine or cutting using a cutting machine). The width of each groove of the reactant gas channels 29 and 31 is set to 1.1 mm or shorter. The reactant gas channels 29 and 31 and the cooling medium channel do not have to be formed on the separators 28 and 30. In this case, each of the channels 29 and 31 may be formed on a member other than the separators 28 and 30 or may be formed on a member adjacent to the separator 28 or 30, such as the gas diffusion layer 40 or 44.

The anode separator 28 is disposed on the anode gas diffusion layer 40 such that the fuel gas channel 29 is opposed to the anode gas diffusion layer 40. With this, the fuel gas channel 29 is formed such that the fuel gas flows so as to contact the anode gas diffusion layer 40. The fuel gas is supplied through the fuel gas channel 29 to the catalyst layer 38. The water generated by the electric power generating reaction of the stack 10 and the unconsumed excess gas unused in the electric power generating reaction are discharged from the stack 10 through the fuel gas channel 29.

The cathode separator 30 is disposed on the cathode gas diffusion layer 44 such that the oxidizing gas channel 31 is opposed to the cathode gas diffusion layer 44. With this, the oxidizing gas channel 31 is formed such that the oxidizing gas flows so as to contact the cathode gas diffusion layer 44. By the cathode gas diffusion layer 44, the oxidizing gas is supplied through the gas diffusion layer 44 to the catalyst layer 42. The unconsumed excess gas unused in the electric power generating reaction is discharged from the stack 10 through the oxidizing gas channel 31. The discharged, unconsumed excess gas is discharged to, for example, the atmosphere.

As the above-described cooling system, for example, a cooling medium, such as water or an antifreezing fluid, is supplied by a cooling medium supply unit (not shown) to the cooling medium channel formed on the cooling surface of each of the separators 28 and 30. With this, the heat generated at the time of the electric power generation of the membrane-electrode assembly 26 is removed. Thus, the stack 10 is cooled.

### Operational Advantages

According to the membrane-electrode assembly 26 configured as above, since each of the gas diffusion layers 40 and 44 does not include expensive carbon fibers as the base member, the membrane-electrode assembly 26 can be reduced in cost.

The ratio (y/x) of the tensile strength y (N/cm) of the gas diffusion layer 40, 44 to the dry-wet size change rate x (%) of the electrolyte membrane 32 is set to 0.10 or higher. With this, the operational advantage described below may be obtained. To be specific, the gas diffusion layers 40 and 44 sandwich the electrolyte membrane 32 via the catalyst layers 38 and 42 by the fastening power of the stack 10, so that when the electrolyte membrane 32 expands or contracts by a dry-wet cycle, stress is applied to the gas diffusion layers 40 and 44 due to the expansion or contraction of the electrolyte membrane 32. However, when this stress is lower than the strength (such as the tensile strength) of each of the gas diffusion layers 40 and 44, the plastic deformation and break of each of the gas diffusion layers 40 and 44 do not occur. Here, in a case where the dry-wet size change rate of the electrolyte membrane 32 in the expansion or contraction by the dry-wet cycle is suppressed such that the stress applied to each of the gas diffusion layers 40 and 44 by the above expansion or contraction is lower than the strength of each of the gas diffusion layers 40 and 44, the plastic deformation and break of the gas diffusion layer can be prevented. According to Examples below, the tensile strength y (N/cm) of each of the gas diffusion layers 40 and 44 with respect to the dry-wet size change rate x (%) of the electrolyte membrane 32 in the expansion or contraction by the dry-wet cycle is 0.10. Since the stress applied to each of the gas diffusion layers 40 and 44 by the expansion or contraction of the electrolyte membrane by the dry-wet cycle is lower than the strength of each of the gas diffusion layers 40 and 44 when the ratio y/x is 0.10 or higher, the plastic deformation, break, and the like of the gas diffusion layers 40 and 44 can be prevented. As a result, even each of the gas diffusion layers 40 and 44 not including the carbon fibers as the base member can obtain high mechanical durability.

Further, since the tensile strength y of each of the gas diffusion layers 40 and 44 is set to 4.2 N/cm or lower, the thickness of each of the gas diffusion layers 40 and 44 not including the carbon fibers as the base member is suppressed to 1 mm or shorter. Therefore, the increases in cost and size of each of the gas diffusion layers 40 and 44 due to the increase in thickness can be prevented. In addition, the decrease in the gas permeability of each of the gas diffusion layers 40 and 44 due to the increase in thickness can be prevented.

In addition, each of the dry-wet size change rates xMT and xTD of the electrolyte membrane 32 is set to 20% or lower. By these dry-wet size change rates, the required tensile strength y of each of the gas diffusion layers 40 and 44 becomes 2 N/cm or higher. Thus, the tensile strength y can be set to 4.2 N/cm or lower.

It is preferable that each of the dry-wet size change rates xMT and xTD of the electrolyte membrane 32 be set in a range from 1 to 10%. As above, in a case where the dry-wet size change rate of the electrolyte membrane 32 is lowered, the required tensile strength y of each of the gas diffusion layers 40 and 44 becomes low. Therefore, for example, the thickness of each of the gas diffusion layers 40 and 44 can be reduced.

In a case where each of the dry-wet size change rates xMT and xTD of the electrolyte membrane 32 is set in a range from 5 to 10%, an occupancy rate of the core member existing inside the membrane can be reduced by decreasing the thickness of the core member of the electrolyte membrane 32 or increasing the sizes of the holes in the core member. Therefore, the decrease in proton conductivity of the electrolyte membrane 32 due to the core member can be prevented, and the voltage drop of the electrolyte membrane 32 is suppressed.

Further, each of an adhesive strength between the catalyst layer 38 and the gas diffusion layer 40 and an adhesive strength between the catalyst layer 42 and the gas diffusion layer 44 is set to 0.1 MPa or lower. With this, the gas diffusion layers 40 and 44 are prevented from being separated from the catalyst layers 38 and 42, respectively.

The width of each groove of the reactant gas channels 29 and 31 of the separators 28 and 30 is set to 1.1 mm or shorter. With this, even if each of the gas diffusion layers 40 and 44 extends in a groove width direction in accordance with the expansion of the electrolyte membrane 32, each of the gas diffusion layers 40 and 44 is prevented from getting into the groove. Therefore, it is possible to prevent a case where the gas diffusion layers 40 and 44 distort at corners of the grooves, the stress concentration occurs at these portions contacting the corners, and the gas diffusion layers 40 and 44 break.

### Examples

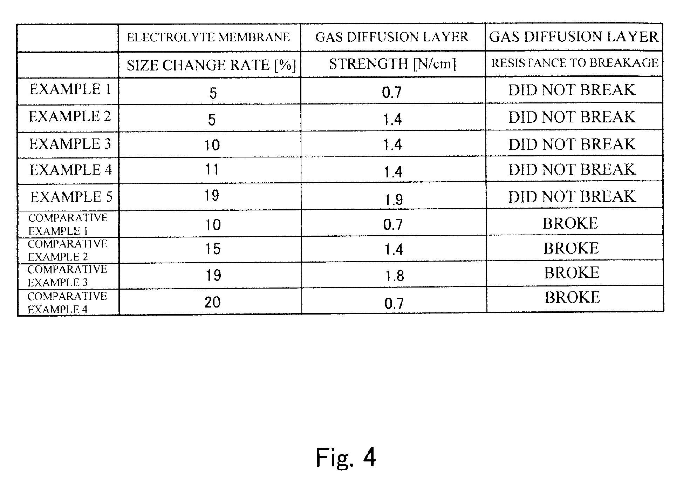

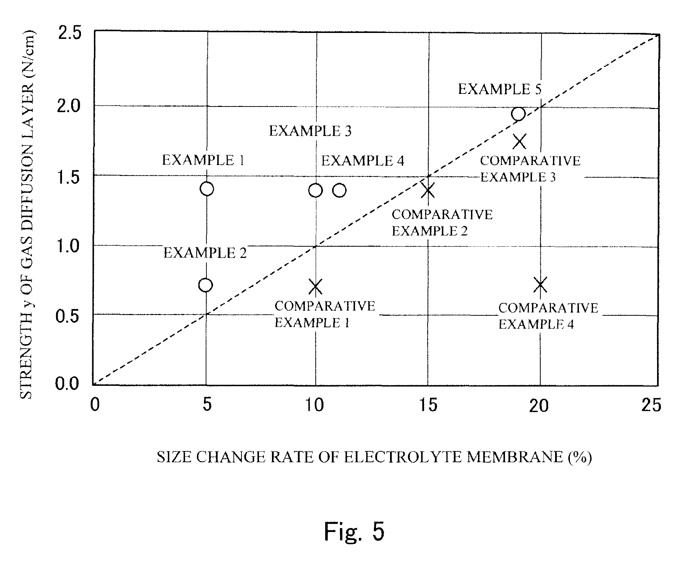

Fig. 4 is a table showing results of durability tests of the membrane-electrode assembly. Fig. 5 is a graph showing a plot of data of test results of Fig. 4.

The catalyst layers were formed by applying a catalyst layer forming ink to both surfaces of the electrolyte membrane and drying the ink. Then, the gas diffusion layers not including the carbon fibers as the base member were produced as above. These gas diffusion layers were respectively disposed on the catalyst layers, and these layers were heated while, for example, being compressed between two rollers. Pressure and heating conditions when adhering the catalyst layer and the gas diffusion layer were adjusted such that the adhesive strength between the catalyst layer and the gas diffusion layer became 0.1 MPa or higher. With this, a fluorine electrolyte ionomer contained in the catalyst layer was bonded to carbon contained in the gas diffusion layer. Thus, the gas diffusion layer and the catalyst layer were adhered to each other. As above, the membrane-electrode assembly formed by stacking the electrolyte membrane, the catalyst layers, and the gas diffusion layers was produced.

As shown in Fig. 5, the membrane-electrode assemblies of Examples 1 to 5 and Comparative Examples 1 to 4, which were different from each other regarding the size change rate x (%) of the electrolyte membrane and the tensile strength y (N/cm) of the gas diffusion layer, were prepared. The size change rate x (%) of the electrolyte membrane was adjusted by, for example, changing the porosity of the core member. The tensile strength y (N/cm) of the gas diffusion layer was adjusted by changing the thickness of the gas diffusion layer. In each of the membrane-electrode assemblies of Examples 1 to 5, the ratio (y/x) of the tensile strength y (N/cm) of the gas diffusion layer to the size change rate x (%) of the electrolyte membrane was 0.10 or higher. In contrast, in each of Comparative Examples 1 to 4, the ratio (y/x) was lower than 0.10.

As described above, the membrane-electrode assemblies of Examples 1 to 5 were different from the membrane-electrode assemblies of Comparative Examples 1 to 4 regarding whether or not the ratio (y/x) was 0.10 or higher. However, other than this, Examples 1 to 5 and Comparative Examples 1 to 4 were the same as one another. To be specific, in each of the membrane-electrode assemblies of Examples 1 to 5 and Comparative Examples 1 to 4, the tensile strength y of the gas diffusion layer was 4.2 N/cm or lower. The thickness of the gas diffusion layer was 1 mm or shorter. Each of the size change rate in the length direction of the electrolyte membrane and the size change rate in the width direction of the electrolyte membrane was 20% or lower. The adhesive strength between the catalyst layer and the gas diffusion layer was 0.1 MPa or higher. The width of the groove formed on the separator was 1.1 mm or shorter.

The stacks were formed by sandwiching each of the membrane-electrode assemblies of Examples 1 to 5 and Comparative Examples 1 to 4 between a pair of separators. First and second endurance tests were performed using these stacks. The durability of the gas diffusion layer was determined based on whether or not the gas diffusion layer breaks in these endurance tests. The break of the gas diffusion layer was visually confirmed.

In the first endurance test (start-up and stop test), regarding each of the stacks respectively including the membrane-electrode assemblies of Examples 1, 2, and 5, the power generation and the stop were repeatedly performed 4,000 times. At the time of the stop of the power generation, the temperature inside the stack was set to 50°C, and at the time of the power generation, the temperature inside the stack was set to 70°C. At the time of each of the power generation and the stop, the humidified fuel gas was supplied to the anode 34, and the oxidizing gas of a relative humidity of 0% was supplied to the cathode. At the time of the power generation, the relative humidity of the cathode became substantially 100% by the water generated in accordance with the electric power generation. As a result, as shown in Figs. 4 and 5, the gas diffusion layers of Examples 1, 2, and 5 did not break.

In the second endurance test (dry-wet cycle test), regarding the stacks respectively including the membrane-electrode assemblies of Examples 3 and 4 and Comparative Examples 1 to 4, each stack was left in a dry state and then left in a wet state, and this process was repeated three times. In the dry state, the temperature inside the stack was set to 23°C. The fuel gas of a relative humidity of 50% was supplied to the anode 34, and the oxidizing gas of a relative humidity of 50% was supplied to the cathode. In the wet state, the stack was immersed in hot water of 100°C. At this time, the temperature inside the stack was 90°C. In each of the dry state and the wet state, the electric power generation of the stack was not performed. As a result, as shown in Figs. 4 and 5, the gas diffusion layers of Examples 3 and 4 did not break, but the gas diffusion layers of Comparative Examples 1 to 4 broke.

Simulations regarding Examples 1 and 5 and Comparative Examples 1 and 4 were performed based on the ratio (y/x) of the tensile strength y (N/cm) of the gas diffusion layer to the size change rate x (%) of the electrolyte membrane. As a result, as with the first and second endurance tests shown in Figs. 4 and 5, the gas diffusion layers of Examples 1 and 5 did not break, but the gas diffusion layers of Comparative Examples 1 and 4 broke.

It became clear from the above results that the gas diffusion layer did not break in a case where the relation between the size change rate x (%) of the electrolyte membrane and the tensile strength y (N/cm) of the gas diffusion layer satisfied "y/x > 0.10".

In a case where the size change rate of the electrolyte membrane is low as in Example 2, the tensile strength of the gas diffusion layer can be decreased such that "y/x ≥ 0.10" is satisfied. Therefore, for the purpose of increasing the tensile strength of the gas diffusion layer, it is unnecessary to increase the thickness of the gas diffusion layer. Thus, the gas diffusion layer can be reduced in cost and size.

In contrast, even in a case where the size change rate of the electrolyte membrane is high as in Example 5, the break of the gas diffusion layer can be prevented by increasing the tensile strength of the gas diffusion layer such that "y/x ≥ 0.10" is satisfied. Therefore, the membrane-electrode assembly including the gas diffusion layer can achieve excellent durability. In addition, even in this case, since it is unnecessary to uselessly increase the tensile strength of the gas diffusion layer, the gas diffusion layer is reduced in cost and size.

Further, in a case where the stack generates electric power under conditions that the temperature inside the stack is not lower than 23 °C and not higher than 90°C, the gas diffusion layer satisfying "y/x ≥ 0.10" does not break. Thus, the durability is excellent.

In a case where the stack generates electric power under conditions that the relative humidity inside the membrane-electrode assembly is not lower than 0% and not higher than 100%, the gas diffusion layer satisfying "y/x ≥ 0.10" does not break. Thus, the membrane-electrode assembly excels in durability.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the spirit of the present invention.

### Industrial Applicability

The membrane-electrode assembly, fuel cell stack, and method of operating the fuel cell system according to the present invention are useful as, for example, a membrane-electrode assembly, fuel cell stack, and method of operating a fuel cell system, which are lower in cost and higher in durability than conventional arts.

By the improvement of the mechanical durability of the membrane-electrode assembly of the polymer electrolyte fuel cell system, the present invention can continue the electric power generation for a long period of time with high performance.

### Reference Signs List

- 10: fuel cell stack
- 14: oxidizing gas supply unit (reactant gas supply device)
- 16: material gas supply unit (reactant gas supply device)
- 18: reformer
- 32: polymer electrolyte membrane
- 38: anode catalyst layer
- 42: cathode catalyst layer
- 40: anode gas diffusion layer
- 44: cathode gas diffusion layer
- 26: membrane-electrode assembly
- 28: anode separator
- 29: fuel gas channel (groove, reactant gas channel)
- 30: cathode separator
- 31: oxidizing gas channel (groove, reactant gas channel)

## Claims

1. A membrane-electrode assembly comprising:
a polymer electrolyte membrane;
catalyst layers disposed on the polymer electrolyte membrane; and
gas diffusion layers respectively disposed on the catalyst layers, wherein:
each of the gas diffusion layers is constituted by a porous member containing electrically-conductive particles and polymer resin as major components; and
a ratio y/x of a tensile strength y (N/cm) of the gas diffusion layer to a dry-wet size change rate x (%) of the polymer electrolyte membrane is 0.10 or higher.

2. The membrane-electrode assembly according to claim 1, wherein the tensile strength y of the gas diffusion layer is 4.2 N/cm or lower.

3. The membrane-electrode assembly according to claim 1 or 2, wherein each of the dry-wet size change rate in a length direction that is a flow direction of the polymer electrolyte membrane when producing the polymer electrolyte membrane and the dry-wet size change rate in a width direction perpendicular to the length direction is 20% or lower.

4. The membrane-electrode assembly according to any one of claims 1 to 3, wherein an adhesive strength between the catalyst layer and the gas diffusion layer is 0.1 MPa or higher.

5. A fuel cell stack comprising
a plurality of cells, each including the membrane-electrode assembly according to any one of claims 1 to 4 and a pair of plate-shaped separators sandwiching the membrane-electrode assembly, wherein
a width of a groove that is a reactant gas channel formed on a main surface of each of the separators is 1.1 mm or shorter, the main surface being opposed to the gas diffusion layer of the membrane-electrode assembly.

6. A fuel cell system comprising:
a fuel cell stack including a plurality of cells, each including the membrane-electrode assembly according to any one of claims 1 to 4 and a pair of plate-shaped separators sandwiching the membrane-electrode assembly, reactant gas channels being respectively formed on main surfaces of the separators, the main surfaces being respectively opposed to the pair of gas diffusion layers of the membrane-electrode assembly; and
a reactant gas supply device configured to respectively supply a fuel gas and an oxidizing gas as reactant gases to the reactant gas channels of the pair of separators.

7. A method of operating a fuel cell system,
the fuel cell system comprising:
a fuel cell stack including a plurality of cells, each including the membrane-electrode assembly according to any one of claims 1 to 4 and a pair of plate-shaped separators sandwiching the membrane-electrode assembly, reactant gas channels being respectively formed on main surfaces of the separators, the main surfaces being respectively opposed to the pair of gas diffusion layers of the membrane-electrode assembly; and
a reactant gas supply device, wherein
the fuel cell stack generates electric power in such a manner that the reactant gas supply device respectively supplies a fuel gas and an oxidizing gas as reactant gases to the reactant gas channels of the pair of separators of the fuel cell stack.

8. The method according to claim 7, wherein the fuel cell stack generates the electric power under conditions that a temperature inside the fuel cell stack is not lower than 5°C and not higher than 90°C.

9. The method according to claim 7, wherein the fuel cell stack generates the electric power under conditions that a relative humidity inside the membrane-electrode assembly is not lower than 0% and not higher than 100%.
